# EUROPÄISCHE PATENTSCHRIFT

(11) **EP 2 411 461 B1**
(45) Veröffentlichungstag und Bekanntmachung des Hinweises auf die Patenterteilung: **22.04.2015**
(21) Anmeldenummer: 10709429.4
(22) Anmeldetag: 16.03.2010
(51) Int. Cl.: C08K 5/521, C08L 51/08, C08L 69/00

(54) **FLAMMGESCHÜTZTE SCHLAGZÄHMODIFIZIERTE POLYCARBONAT-ZUSAMMENSETZUNGEN**
FLAME-RETARDED, IMPACT-MODIFIED POLYCARBONATE COMPOSITIONS
COMPOSITIONS DE POLYCARBONATE IGNIFUGES À RÉSILIENCE MODIFIÉE

(30) Priorität: 25.03.2009 DE 102009014878
(43) Veröffentlichungstag der Anmeldung: 01.02.2012
(73) Patentinhaber: Bayer Intellectual Property GmbH, 40789 Monheim (DE)
(72) Erfinder: FELDERMANN, Achim, 40597 Düsseldorf (DE); ECKEL, Thomas, 41540 Dormagen (DE); SEIDEL, Andreas, 41542 Dormagen (DE); WITTMANN, Dieter, 51375 Leverkusen (DE)
(74) Vertreter: BIP Patents
(86) Internationale Anmeldenummer: PCT/EP2010/001642
(87) Internationale Veröffentlichungsnummer: WO 2010/108618

(56) Entgegenhaltungen:
- WO-A2-2009/105087
- US-A1- 2008 214 731
- US-B1- 6 423 766

## Beschreibung

Die vorliegende Erfindung betrifft flammgeschützte schlagzähmodifizierte Polycarbonat-Zusammensetzungen, welche ein Pfropfpolymerisat enthaltend einen Silikon-Acrylat-Kompositkautschuk und ein Bisphenol A basiertes Oligophosphat enthalten und frei sind von kautschukfreiem Polyalkyl(alkyl)acrylat, die Verwendung der Polycarbonat-Zusammensetzungen zur Herstellung von Formkörpern und die Formkörper selbst.

WO-A 2004/069914 offenbart flammwidrige Polycarbonatzusammensetzungen, die Polyalkyl(alkyl)acrylat und halogenfreie Oligophospate enthalten und frei sind an Polymeren, an deren Aufbau Butadien, Styrol oder Acrylnitril beteiligt sind. Die Zusammensetzungen zeichnen sich durch gute Bindenahtfestigkeit, Chemikalienbeständigkeit, Wärmeformbeständigkeit, Reißdehnung und Fließfähigkeit aus. Die Zusammensetzungen der vorliegenden Erfindung unterscheiden sich von den Zusammensetzungen gemäß WO-A 2004/069914 dadurch, dass die erfindungsgemäßen Zusammensetzungen kein kautschukfreies Polyalkyl(alkyl)acrylat enthalten.

WO-A 2002/046305 offenbart schlagzähmodifizierte, flammwidrige Polycarbonat-Zusammensetzungen enthaltend Polycarbonat, Schlagzähmodifikator, phosphorhaltige Flammschutzmittel. Die Zusammensetzungen zeichnen sich durch eine verbesserte Kerbschlagzähigkeit im Tieftemperaturbereich aus. WO-A 2002/046305 offenbart aber keine Zusammensetzungen enthaltend einen Schlagzähmodifikator mit einer Pfropfgrundlage aus Silikon-Acrylat-Kompositkautschuk.

EP-A 635547 offenbart flammgeschützte Polycarbonatzusammensetzungen enthaltend Polycarbonat, ein Copolymer-Gel, einen Acrylat- oder Dienkautschuk basierten Schlagzähmodifikator, ein Flammschutzmittel wie beispielsweise Oligophosphat und gegebenenfalls ein Schlagzähmodifikator mit einer Pfropfgrundlage aus Dienkautschuk, Acrylatkautschuk oder EPDM Kautschuk. EP-A 635547 offenbart aber keine Zusammensetzungen enthaltend einen Schlagzähmodifikator mit einer Pfropfgrundlage aus Silikon-Acrylat-Kompositkautschuk.

US 6423766 offenbart flammgeschützte Polycarbonatzusammensetzungen mit einem Schlagzähmodifikator mit einer Pfropfgrundlage aus Silikon-Acrylat-Kompositkautschuk, wobei das Gewichtsverhältnis von Schlagzähmodifikator zu Phosphor aus dem Phoshorsäureester zwischen 2 und 15 beträgt. Die Zusammensetzungen haben verbesserte mechanische Eigenschaften und ein gutes Verarbeitungsverhalten. Die Zusammensetzungen der vorliegenden Erfindung unterscheiden sich von den Zusammensetzungen gemäß US 6423766 dadurch, dass die erfindungsgemäßen Zusammensetzungen ein höheres Gewichtsverhältnis von Schlagzähmodifikator zu Phosphor aus dem Phoshorsäureester aufweisen.

Es bestand ein Bedürfnis, die aus dem Stand der Technik bekannten Zusammensetzungen und Formmassen hinsichtlich ihrer Balance aus Flammschutzverhaltens und Zähigkeit zu verbessern, wobei gleichzeitig diese Zusammensetzungen und Formmassen eine hohe Alterungsstabilität und eine hohe Wärmeformbeständigkeit aufweisen müssen. Es war daher Aufgabe der vorliegenden Erfindung, alterungsstabile Polycarbonat-Zusammensetzungen und -Formmassen bereitzustellen, die sich bei hoher Wärmeformbeständigkeit durch eine verbesserte Balance aus Flammschutzverhalten und Zähigkeit auszeichnen.

Es wurde überraschend gefunden, dass Zusammensetzungen bestehend aus
A) 77 bis 90 Gew.-Teile, bevorzugt 80 bis 90 Gew.-Teile, besonders bevorzugt 83,5 bis 86,8 Gew.-Teile (bezogen auf die Summe der Gew.-Teile der Komponenten A + B + C) lineares und/ oder verzweigtes aromatisches Polycarbonat und/oder aromatisches Polyestercarbonat,
B) 6 bis 12 Gew.-Teile, bevorzugt 7 bis 11 Gew.-Teile, besonders bevorzugt 8,5 bis 10 Gew.-Teile (bezogen auf die Summe der Gew.-Teile der Komponenten A + B+ C) Pfropfpolymerisat mit
   - B.1: 5 bis 30 Gew.-%, vorzugsweise 5 bis 25 Gew.-%, besonders bevorzugt 11 bis 19 Gew. % (jeweils bezogen auf das Pfropfpolymerisat B) einer Hülle aus mindestens einem Vinylmonomeren und
   - B.2: 95 bis 70 Gew.-%, vorzugsweise 90 bis 75 Gew.-%, besonders bevorzugt 81 bis 89 Gew. % (jeweils bezogen auf das Pfropfpolymerisat B) einer oder mehrerer Pfropfgrundlagen aus Silikon-Acrylat-Kompositkautschuk,
C) 4 bis 10 Gew.-Teile, bevorzugt 5 bis 9 Gew.-Teile, besonders bevorzugt 5,2 bis 6,5 Gew.-Teile (bezogen auf die Summe der Gew.-Teile der Komponenten A + B+ C) Phosphorverbindungen gemäß Formel (VIII), 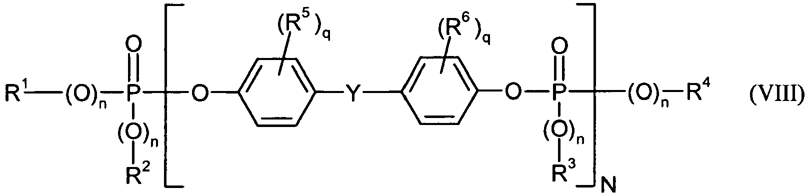 worin
   - R¹, R², R³ und R⁴,: unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
   - n: unabhängig voneinander 0 oder 1,
   - q: unabhängig voneinander 0, 1, 2, 3 oder 4,
   - N: 0,1 bis 10, bevorzugt 0,5 bis 5, besonders bevorzugt 0,9 bis 3, höchst bevorzugt 1,06 bis 1,15,
   - R⁵ und R⁶: unabhängig voneinander C₁-C₄-Alkyl, vorzugsweise Methyl, oder Halogen, vorzugsweise Chlor und/oder Brom, und
   - Y: Einfachbindung, C₁-C₇-Alkyliden, C₁-C₇-Alkylen, C₅-C₁₂-Cycloalkylen, C₅-C₁₂-Cycloalkyliden, -O-, -S-, -SO-, -SO₂- oder -CO- bedeuten,
D) 0,1 bis 3 Gew.-Teile, bevorzugt 0,01 bis 1 Gew.-Teile, besonders bevorzugt 0,1 bis 0,6 Gew.-Teile (bezogen auf die Summe der Gew.-Teile der Komponenten A + B+ C) Antitropfmittel,
E) 0 - 3 Gew.-Teile, bevorzugt 0 bis 1 Gew.-Teile (bezogen auf die Summe der Gew.-Teile der Komponenten A + B+ C) harzartiges, thermoplastisches und kautschukfreies Vinyl(Co)Polymerisat (E.1) und/oder Polyalkylenterephthalat (E.2), besonders bevorzugt ist die Zusammensetzung frei von thermoplastischen kautschukfreiem Vinyl(Co)Polymerisate (E.1) und/oder Polyalkylenterephthalaten (E.2),
   und
F) 0,1 bis 20 Gew.-Teile, bevorzugt 0,1 bis 10 Gew.-Teile, besonders bevorzugt 0,2 bis 5 Gew.-Teile (bezogen auf die Summe der Gew.-Teile der Komponenten A + B+ C) weitere bestimmte Zusatzstoffe, wobei das Gewichtsverhältnis von Komponenten B zu Phosphorgehalt aus Komponente C in einem Bereich von 16 bis 22 zu 1, bevorzugt von 17 bis 19 zu 1 liegt,
wobei die Zusammensetzungen frei sind von kautschukfreiem Polyalkyl(alkyl)acrylat,
und wobei alle Gewichtsteilangaben in der vorliegenden Anmeldung so normiert sind, dass die Summe der Gewichtsteile der Komponenten A+B+C in der Zusammensetzung 100 ergeben, das gewünschte Eigenschaftsprofil aufweisen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 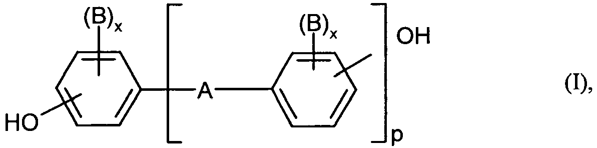 wobei
A eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 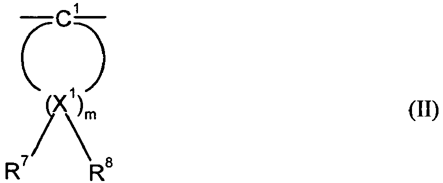 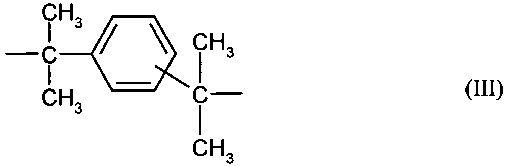
B jeweils C₁ bis C₁₂-Alkyl, vorzugsweise Methyl, Halogen, vorzugsweise Chlor und/oder Brom
   - x: jeweils unabhängig voneinander 0, 1 oder 2,
   - p: 1 oder 0 sind, und
   - R⁷ und R⁸: für jedes X¹ individuell wählbar, unabhängig voneinander Wasserstoff oder C₁ bis C₆-Alkyl, vorzugsweise Wasserstoff, Methyl oder Ethyl,
   - X¹: Kohlenstoff und
   - m: eine ganze Zahl von 4 bis 7, bevorzugt 4 oder 5 bedeuten, mit der Maßgabe, dass an mindestens einem Atom X¹, R⁷ und R⁸ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxy-phenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2.4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis (3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethyl-butyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten. Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Pfropfpolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Geeignete Monomere B1 sind Vinylmonomere wie Vinylaromaten und /oder kernsubstituierte Vinylaromaten (wie Styrol, α-Methylstyrol, p-Methylstyrol, p-Chlorstyrol), Methacrylsäure-(C₁-C₈)-Alkylester (wie Methylmethacrylat, Ethylmethacrylat, 2-Ethylhexylmethacrylat, Allylmethacrylat), Acrylsäure-(C₁-C₈)-Alkylester (wie Methylacrylat, Ethylacrylat, n-Butylacrylat, t-Butylacrylat), organische Säuren (wie Acrylsäure, Methacrylsäure) und/oder Vinylcyanide (wie Acrylnitril und Methacrylnitril) und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, α-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im allgemeinen eine mittlere Teilchengröße (d₅₀-Wert) von 0,05 bis 10 µm, vorzugsweise 0,06 bis 5 µm, besonders bevorzugt 0,08 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Als Pfropfgrundlage B.2 wird erfindungsgemäß Silikon-Acrylat-Kompositkautschuk eingesetzt. Diese Silikon-Acrylat-Kompositkautschuke sind vorzugsweise Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen.

Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigheit der fertigen Harzzusammensetzung nachteilig beeinflußt).

Silikon-Acrylat-Komposit-Kautschuke sind bekannt und beispielsweise beschrieben in US 5,807,914, EP 430134 und US 4888388.

Geeignete Silikonkautschuk-Komponenten B.2.1 der Silikon-Acrylat-Kompositkautschuke gemäß B.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß B.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quelleungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

CH₂=C(R⁹)-COO-(CH₂)ₚ-SIR¹⁰ₙO_{(3-n)/z} (V-1)

CH₂=CH-SiR¹⁰ₙO_{(3-n)/2} (V-2)

oder

HS-(CH₂)ₚ-SiR¹⁰ₙO_{(3-n)/2} (V-3),

wobei
- R⁹: für Wasserstoff oder Methyl stehen,
- R¹⁰: für C₁-C₄-Alkyl, vorzugsweise Methyl, Ethyl oder Propyl, oder Phenyl,
- n: 0, 1 oder 2 und
- p: eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt. Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wäßrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wäßrigen alkalischen Lösung neutralisiert wird, z.B. durch Zugabe einer wäßrigen Natriumhydroxid, Kaliumhydroxid oder Natriumcarbonat-Lösung.

Geeignete Polyalkyl(meth)acrylatkautschuk-Komponenten B.2.2 der Silikon-Acrylat-Kompositkautschuke gemäß B.2 können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis C₈-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C₁-C₈-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der als Komponente B) genannten Silikon-Acrylat-Komposit-Pfropfkautschuke B werden die Monomere B.1 auf die Kautschuk-Grundlage B.2 aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikon(acrylat)-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

Die als Komponente B) genannten Methacrylsäurealkylester- und Acrylsäurealkylester-Pfropfkautschuke sind kommerziell erhältlich. Beispielhaft seien genannt: Metablen^{®} SX 005, Metablen^{®} S-2030 und Metablen^{®} SRK 200 der Mitsubishi Rayon Co. Ltd.

### Komponente C

Die erfindungsgemäßen Formmassen enthalten als Flammschutzmittel Phosphorverbindungen gemäß Formel (VIII), 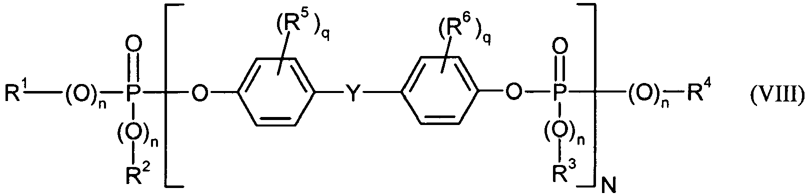 in der die Reste die o.g. Bedeutungen haben,
und gegebenenfalls eine Monophosphorverbindung gemäß Formel (VIII), wobei N = 0 bedeutet und R¹, R², R⁴ und n oben stehende Bedeutung haben,

Die erfindungsgemäß geeigneten Phosphorverbindungen gemäß Komponente C sind generell bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beistein, Bd. 6, S. 177).

Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁-C₄-Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für C₁-C₇-Alkylen, insbesondere für Isopropyliden oder Methylen, besonders bevorzugt für Isopropyliden.

n in der Formel (I) kann unabhängig voneinander 0 oder 1 sein, vorzugsweise ist n gleich 1.

q kann 0, 1, 2, 3 oder 4 sein, vorzugsweise ist q 0, 1 oder 2, besonders bevorzugt ist q = 0.

Als erfindungsgemäße Komponente C können auch Mischungen verschiedener Phosphate eingesetzt werden. In diesem Fall hat N einen Durchschnittswert. In diesem Gemisch können auch Monophosphorverbindungen (N = 0) enthalten sein. Der Durchschnittswert von N kann Werte von 0,1 bis 10, bevorzugt 0,5 bis 5, besonders bevorzugt 0,9 bis 3, höchst bevorzugt 1,06 bis 1,15 annehmen.

Die mittleren N-Werte können bestimmt werden, in dem mittels geeigneter Methode [Gaschromatografie (GC), High Pressure Liquid Chromatography (HPLC), Gaspermeationschromatographie (GPC)] die Zusammensetzung der Phosphat-Mischung (Molekulargewichtsverteilung) bestimmt wird und daraus die Mittelwerte für N berechnet werden.

### Antitropfmittel D

Als Antitropfmittel können die erfindungsgemäßen Zusammensetzungen vorzugsweise fluorierte Polyolefine D enthalten. Fluorierte Polyolefine sind allgemein bekannt (vgl. z.B. EP-A 640 655). Ein handelsübliches Produkt ist beispielsweise Teflon^{®} 30 N von der Firma DuPont.

Die fluorierten Polyolefine können auch in Form einer koagulierten Mischung von Emulsionen der fluorierten Polyolefine mit Emulsionen der Pfropfpolymerisate B) oder einer Emulsion eines Copolymerisats E.1) vorzugsweise auf Styrol/Acrylnitril-Basis eingesetzt werden, wobei das fluorierte Polyolefin als Emulsion mit einer Emulsion des Pfropfpolymerisats bzw. Copolymerisats gemischt und anschließend koaguliert wird.

Weiterhin können die fluorierten Polyolefine als Präcompound mit dem Pfropfpolymerisat B) oder einem Copolymerisat E.1) auf vorzugsweise Styrol/Acrylnitril-Basis eingesetzt werden. Die fluorierten Polyolefine werden als Pulver mit einem Pulver oder Granulat des Pfropfpolymerisats bzw. Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 bis 95 Gew.-%, vorzugsweise 7 bis 60 Gew.-%.

### Komponente E

Die Komponente E umfasst ein oder mehrere thermoplastische Vinyl(Co)Polymerisate E.1 und/oder Polyalkylenterephthalate E.2.

Geeignet sind als Vinyl(Co)Polymerisate E.1 Polymerisate von mindestens einem Monomeren aus der Gruppe der Vinylaromaten, Vinylcyanide (ungesättigte Nitrile), ungesättigte Carbonsäuren sowie Derivate (wie Anhydride und Imide) ungesättigter Carbonsäuren. Insbesondere geeignet sind (Co)Polymerisate aus
- E.1.1: 50 bis 99, vorzugsweise 60 bis 80 Gew.-Teilen Vinylaromaten und/oder kernsubstituierten Vinylaromaten (wie Styrol, α-Methylstyrol, p-Methylstyrol, p-Chlorstyrol), und
- E.1.2: 1 bis 50, vorzugsweise 20 bis 40 Gew.-Teilen Vinylcyanide (ungesättigte Nitrile, wie Acryl-nitril und Methacrylnitril) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente E.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte. Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure. Die bevorzugten Polyalkylenterephthalate können neben Ethylenglykol-bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im Allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Weitere Zusatzstoffe F

Die erfindungsgemäßen Formmassen bestehend aus wenigstens ein weiteres der üblichen Additive, wie z.B. Gleit- und Entformungsmittel, Nukleiermittel, Antistatika, Stabilisatoren, Farbstoffe und Pigmente sowie Füll- und Verstärkungsstoffe.

Die Komponente F umfasst auch feinstteilige anorganische Verbindungen, die sich durch einen durchschnittlichen Teilchendurchmesser von kleiner oder gleich 200 nm, bevorzugt kleiner oder gleich 150 nm, insbesondere von 1 bis 100 nm auszeichnen. Geeignete feinstteilige anorganische Verbindungen sind hydrathaltige Aluminiumoxide (z.B. Böhmit) oder TiO₂.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782-796.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die anorganischen Verbindungen können nach üblichen Verfahren in die thermoplastischen Formmassen eingearbeitet werden, beispielsweise durch direktes Kneten oder Extrudieren von Formmassen und den feinstteiligen anorganischen Verbindungen. Bevorzugte Verfahren stellen die Herstellung eines Masterbatch, z.B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Verbindungen, z.B. durch Cofällung einer wässrigen Emulsion und den feinstteiligen anorganischen Verbindungen dar, gegebenenfalls in Form von Dispersionen, Suspensionen, Pasten oder Solen der feinstteiligen anorganischen Materialien.

Die Zusammensetzungen gemäß der vorliegenden Erfindungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert. Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die thermoplastischen Zusammensetzungen und Formmassen gemäß der vorliegenden Erfindung eignen sich aufgrund ihrer ausgezeichneten Balance aus Flammfestigkeit und Zähigkeit bei gleichzeitig hoher Alterungsstabilität und hoher Wärmeformbeständigkeit zur Herstellung von Formkörpern jeglicher Art. Aufgrund der Wärmeformbeständigkeit und rheologischen Eigenschaften sind Verarbeitungstemperaturen von über 240°C bevorzugt.

Gegenstand der Erfindung sind ebenfalls Verfahren zur Herstellung der Formmassen und die Verwendung der Formmassen zur Herstellung von Formkörpern. Die Formmassen können durch Spritzguss zu Formkörpern verarbeitet werden oder es können die Formmassen zu Platten oder Folien extrudiert werden. Ein weiterer Gegenstand der Erfindung ist die Herstellung von Formkörpern durch Thermoformen aus vorher hergestellten Platten oder Folien.

Die Formkörper sind für folgende Anwendungen geeignet: Fahrzeugaußenteile oder Innenausbauteile für Kraftfahrzeuge, Busse, Lastwagen, Wohnmobile, Schienenfahrzeuge, Luftfahrzeuge, Wasserfahrzeuge oder sonstige Fahrzeuge, Abdeckplatten für den Bausektor, flächige Wandelemente, Trennwände, Wandschutz- und Kantenschutzleisten, Profile für Elektroinstallationskanäle, Kabelleiter, Stromschienenabdeckungen, Fenster- und Türprofile, Möbelteile und Verkehrsschilder. Die Formkörper sind besonders für folgende Anwendungen geeignet: Fahrzeugaußenteile oder Innenausbauteile für PKW, Busse, Lastwagen, Wohnmobile, Schienen- und Luftfahrzeuge. Besonders bevorzugt eignen sich die Formkörper zur Herstellung von Seitenwänden, Verkleidungen und/oder Abdeckungen von Airbags und/oder von Lüftungen, Seitenteilen und Griffen oder Teile von Kopfstützen oder Ablagen eines Kraftfahrzeugs Busses, Lastwagens oder Wohnmobils.

Die folgenden Beispiele dienen der weiteren Erläuterung der Erfindung.

### Beispiele

### Komponente A-1

Lineares Polycarbonat auf Basis Bisphenol A mit einer relativen Lösungsviskosität von ηᵣₑₗ = 1,28 gemessen in CH₂Cl₂ als Lösungsmittel bei 25°C und einer Konzentration von 0,5g/100ml.

### Komponente A-2:

Lineares Polycarbonat auf Basis Bisphenol A mit einer relativen Lösungsviskosität von ηᵣₑₗ = 1,20 gemessen in CH₂Cl₂ als Lösungsmittel bei 25°C und einer Konzentration von 0,5g/100ml.

### Komponente A-3:

Verzweigtes Polycarbonat auf Basis Bisphenol A mit einer relativen Lösungsviskosität von ηᵣₑₗ = 1,33 gemessen in CH₂Cl₂ als Lösungsmittel bei 25°C und einer Konzentration von 0,5g/100ml, welches durch Zugabe von 0.3 mol-% Isatinbiscresol bezogen auf die Summe von Isatinbiscresol und Bisphenol A verzweigt wurde.

### Komponente B-1:

Pfropfpolymerisat aus 15 Gew.-% einer Hülle aus Polymethylmethacrylat auf 85Gew.-% einer Pfropfgrundlage aus einem Silikon-Acrylat-Kompositkautschuk.

### Komponente B-2 (Vergleich):

Pfropfpolymerisat aus 25 Gew.-% einer Hülle aus SAN (Gewichtsverhältnis Styrol zu Acrylnitril = 72:28) auf 75% einer Pfropfgrundlage aus Polybutadienkautschuk.

### Komponente B-3 (Vergleich):

Pfropfpolymerisat aus 20 Gew.-% einer Hülle aus Polymethylmethacrylat (PMMA) auf 80 Gew.-% einer Pfropfgrundlage aus Butylacrylatkautschuk.

### Komponente C:

Bisphenol-A basierendes Oligophosphat (Reofoss BAPP) gemäß Formel (VIIIa)

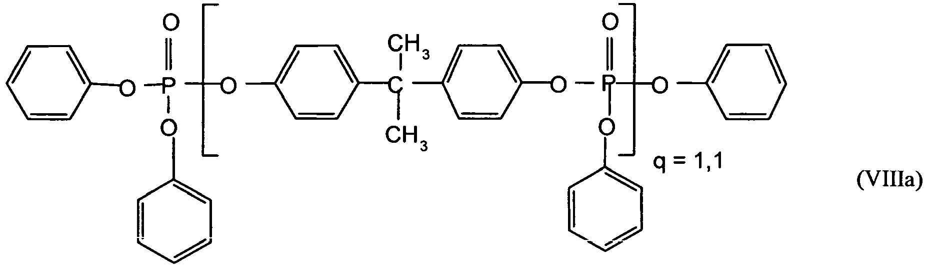

### Komponente D:

Polytetrafluorethylen-Pulver, CFP 6000 N, Fa. Du Pont.

### Komponente F:

F-1: Pentaerythrittetrastearat als Gleit-/Entformungsmittel
F-2: Phosphitstabilisator, Irganox^{®} B 900, Fa. Ciba Speciality Chemicals, Basel, Schweiz.
F-3: Pural^{®} 200, ein Aluminiumoxidhydroxid derFirma Sasol, Hamburg, Deutschland.

**Tabelle: Zusammensetzungen und ihre Eigenschaften**

| Zusammensetzung [Gew.-Tle] | **1** | **2** | **3** | **4 (Vgl.)** | **5 (Vgl.)** | **6 (Vgl.)** | **7 (Vgl.)** |
|---|---|---|---|---|---|---|---|
| A-1 | 55,0 | | | 55,0 | 55,0 | 55,0 | 55,0 |
| A 2 | 30,0 | 42,5 | | 30,0 | 30,0 | 30,0 | 30,0 |
| A-3 | | 42,5 | 85,0 | | | | |
| B-1 | 9,0 | 9,0 | 9,0 | | | 11,0 | 8,0 |
| B-2 | | | | 9,0 | | | |
| B-3 | | | | | 9,0 | | |
| C | 6,0 | 6,0 | 6,0 | 6,0 | 6,0 | 4,0 | 7,0 |
| D | 0,4 | 0,4 | 0,4 | 0,4 | 0,4 | 0,4 | 0,4 |
| F-1 | 0,4 | 0,4 | 0,4 | 0,4 | 0,4 | 0,4 | 0,4 |
| F-2 | 0,1 | 0,1 | 0,1 | 0,1 | 0,1 | 0,1 | 0,1 |
| F-3 | 0,4 | 0,4 | 0,4 | 0,4 | 0,4 | 0,4 | 0,4 |
| Gew.-Verhältnis von Komponente B zu P-Gehalt aus Komponente D | 17 | 17 | 17 | 17 | 17 | 31 | 13 |
| Eigenschaften | | | | | | | |
| Übergangstemperatur zäh/spröd Kerbschlagversuch | -15°C | -25°C | -35°C | -15°C | +5°C | -25°C | -5°C |
| Durchstoßverhalten-30°C | zäh | zäh | zäh | zäh | zäh | zäh | zäh |
| Vicat B120 [°C] | 121 | ja | ja | 120 | 121 | 129 | 120 |
| Brandverhalten UL 94V (2.0 mm) | V0 | V0 | V0 | V0 | V1 | V1 | V0 |
| Doppelbindungsfreier Kautschuk | ja | ja | ja | nein | ja | ja | ja |

Die vorliegenden Beispiele zeigen, dass nur die erfindungsgemäßen Zusammensetzungen 1 bis 3 die vorteilhafte Kombination aus guter Zähigkeit und hoher Wärmeformbeständigkeit zusammen mit exzellenter Flammwidrigkeit mit einem alterungsbeständigen Kautschuk zeigen. Vergleichsbeispiel 4 enthält eine Komponente B mit einer Pfropfkautschukgrundlage auf Butadienbasis und ist nur unzureichend alterungsstabil. Vergleichsbeispiel 5 enthält eine Komponente B mit einer Pfropfkautschukgrundlage aus Acrylatkautschuk und diese Zusammensetzung erfüllt nicht die hohen Anforderungen an Tieftemperaturzähigkeit und Flammwidrigkeit. Ungünstige Verhältnisse von Komponente B (Schlagzähmodifikator) zu Phosphorgehalt aus Komponente D führen entweder zu einem unzureichenden Flammschutz (Vergleichsbeispiel 6) oder einer verschlechterten Zähigkeit (Vergleichsbeispiel 7).

## Patentansprüche

1. Zusammensetzungen bestehend aus
A) 77 bis 90 Gew.-Teile (bezogen auf die Summe der Komponenten A + B + C) lineares und/ oder verzweigtes aromatisches Polycarbonat und/oder aromatisches Polyestercarbonat,
B) 6 bis 12 Gew.-Teile (bezogen auf die Summe der Komponenten A + B+ C) Pfropfpolymerisat mit
B.1 5 bis 30 Gew.-% (jeweils bezogen auf das Pfropfpolymerisat B) einer Hülle aus mindestens einem Vinylonomeren und
B.2 95 bis 70 Gew.-% (jeweils bezogen auf das Pfropfpolymerisat B) einer oder mehrerer Pfropfgrundlagen aus Silikon-Acrylat-Kompositkautschuk,
C) 4 bis 10 Gew.-Teile (bezogen auf die Summe der Komponenten A + B+ C) Phosphorverbindungen gemäß Formel (VIII), 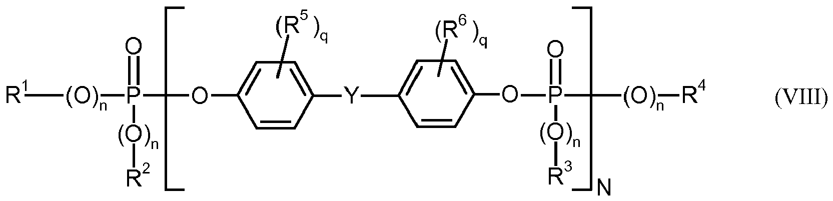 worin
R¹, R², R³ und R⁴, unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, oder 4,
N 0,1 bis 10
R⁵ und R⁶ unabhängig voneinander C₁-C₄-Alkyl, vorzugsweise Methyl, oder Halogen, vorzugsweise Chlor und/oder Brom, und
Y Einfachbindung, C₁-C₇-Alkyliden, C₁-C₇-Alkylen, C₅-C₁₂-Cycloalkylen, C₅-C₁₂-Cycloalkyliden, -O-, -S-, -SO-, -SO₂- oder -CO- bedeuten,
D) 0,1 - 3 Gew.-Teile (bezogen auf die Summe der Komponenten A + B+ C) Antitropfmittel, und
E) 0 - 3 Gew.-Teile (bezogen auf die Summe der Komponenten A + B+ C) harzartiges, thermoplastisches und kautschukfreies Vinyl(Co)Polymerisat (E.1) und/oder Polyalkylenterephthalat (E.2), besonders bevorzugt ist die Zusammensetzung frei von kautschukfreiem thermoplastischen und harzartigen Vinyl(Co)Polymerisat (E.1) und/oder Polyalkylenterephthalaten (E.2), und
F) 0,1 - 20 Gew.-Teile (bezogen auf die Summe der Komponenten A + B+ C) weitere Zusatzstoffe, ausgewählt aus der Gruppe bestehend aus Gleit- und Entformungsmitteln, Nukleiermitteln, Antistatika, Stabilisatoren, Farbstoffen und Pigmenten sowie Füll- und Verstärkungsstoffen, sowie hydrathaltigen Aluminiumoxiden (z.B. Böhmit) oder TiO₂,
wobei das Gewichtsverhältnis von Komponente B zu Phosphorgehalt aus Komponente C in einem Bereich von 16 bis 22 zu 1, bevorzugt von 17 bis 19 zu 1 liegt, und wobei die Zusammensetzungen frei von kautschukfreiem Polyalkyl(alkyl)acrylat sind.

2. Zusammensetzungen gemäß Anspruch 1 bestehend aus 8,5 bis 10 Gew.-Teile (bezogen auf die Summe der Komponenten A + B+ C) Komponente B.

3. Zusammensetzungen gemäß Anspruch 1, wobei die Monomere B.1 ausgewählt sind aus mindestens einem der Gruppe bestehend aus Methylmethacrylat, Ethylmethacrylat, 2-Ethylhexylmethacrylat, Allylmethacrylat, Methylacrylat, Ethylacrylat, n-Butylacrylat und t-Butylacrylat.

4. Zusammensetzungen gemäß Anspruch 1 bestehend aus 5,2 bis 6,5 Gew.-Teile (bezogen auf die Summe der Komponenten A + B+ C) Komponente C.

5. Zusammensetzungen gemäß Anspruch 1 bestehend als Komponente C aus einer Mischung aus einem Monophosphat und einem Oligophosphat gemäß Formel (VIII), wobei der Durchschnittswert von N 0,1 bis 10 ist.

6. Zusammensetzungen gemäß Anspruch 1 oder 5, wobei N 1,06 bis 1,15 ist.

7. Zusammensetzungen gemäß Anspruch 1 bestehend aus 0,1 bis 0,6 Gew.-Teile (bezogen auf die Summe der Komponenten A + B+ C) Komponente D.

8. Zusammensetzungen gemäß Anspruch 1, wobei die Zusammensetzung frei ist von harzartigem, thermoplastischen und kautschukfreiem Vinyl(Co)Polymerisaten (E.1) und/oder Polyalkylenterephthalaten (E.2).

9. Zusammensetzungen gemäß Anspruch 1 bestehend aus 0,1 bis 10 Gew.-Teile (bezogen auf die Summe der Komponenten A + B+ C) Komponente F.

10. Zusammensetzungen gemäß Anspruch 1 oder 9 bestehend als Komponente F aus mindestens eine Additive ausgewählt aus der Gruppe bestehend aus Gleit- und Entformungsmitteln, Nukleiermitteln, Antistatika, Stabilisatoren, Farbstoffen, Pigmenten, Füllstoffen, Verstärkungsstoffen und hydrathaltigen Aluminiumoxiden (z.B. Böhmit) oder TiO₂.

11. Verwendung der Zusammensetzungen nach einem der Ansprüche 1 bis 10 zur Herstellung von spritzgegossenen oder thermogeformten Formkörpern.

12. Formkörper bestehend aus einer Zusammensetzung nach einem der Ansprüche 1 bis 10.

13. Formkörper gemäß Anspruch 12, **dadurch gekennzeichnet, dass** der Formkörper ein Teil eines Kraftfahrzeugs, Busses, Lastwagens, Wohnmobils, Schienenfahrzeugs, Wasserfahrzeugs oder sonstigen Fahrzeuges ist oder eine Abdeckplatte für den Bausektor, flächiges Wandelement, Trennwand, Wandschutz- und Kantenschutzleiste, Profil für Elektroinstallationskanäle, Kabelleiter, Stromschienenabdeckung, Fenster- und Türprofil, Möbelteil oder ein Teil eines Verkehrsschildes ist.

14. Formkörper gemäß Anspruch 12, **dadurch gekennzeichnet, dass** der Formkörper eine Seitenwand, eine Verkleidung oder eine Abdeckung eines Airbags oder einer Lüftung, ein Seitenteil, ein Griff oder ein Teil einer Kopfstütze oder eine Ablage eines Kraftfahrzeugs Busses, Lastwagens oder Wohnmobils ist.

## Claims

1. Compositions consisting of
A) from 77 to 90 parts by weight (based on the sum of components A + B + C) of linear and/or branched aromatic polycarbonate and/or aromatic polyester carbonate,
B) from 6 to 12 parts by weight (based on the sum of components A + B + C) of graft polymer having
B.1 from 5 to 30 wt.% (in each case based on the graft polymer B) of a shell of at least one vinyl monomer and
B.2 from 95 to 70 wt.% (in each case based on the graft polymer B) of one or more graft bases of silicone-acrylate composite rubber,
C) from 4 to 10 parts by weight (based on the sum of components A + B + C) of phosphorus compounds according to formula (VIII) 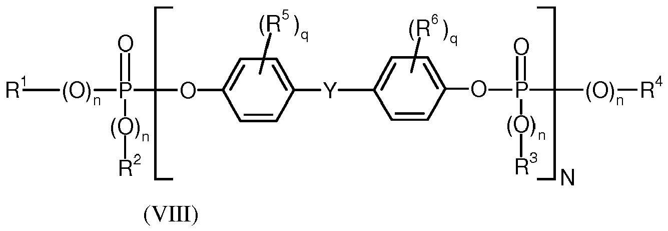 wherein
R¹, R², R³ and R⁴, independently of one another, represent optionally halo-substituted C₁-C₈-alkyl, in each case optionally halo- and/or alkyl-substituted C₅-C₆-cycloalkyl, C₆-C₁₀-aryl or C₇-C₁₂-aralkyl,
indices n independently of one another represent 0 or 1, indices q independently of one another represent 0, 1, 2, 3 or 4,
N represents from 0.1 to 10,
R⁵ and R⁶, independently of one another, represent C₁-C₄-alkyl, preferably methyl, or halogen, preferably chlorine and/or bromine, and
Y represents a single bond, C₁-C₇-alkylidene, C₁-C₇-alkylene, C₅-C₁₂-cycloalkylene, C₅-C₁₂-cycloalkylidene, -O-, -S-, -SO-, - SO₂- or -CO-,
D) from 0.1 to 3 parts by weight (based on the sum of components A + B + C) of anti-dripping agents, and
E) from 0 to 3 parts by weight (based on the sum of components A + B + C) of resin-like, thermoplastic and rubber-free vinyl (co)polymer (E.1) and/or polyalkylene terephthalate (E.2); the composition is particularly preferably free of rubber-free, thermoplastic and resin-like vinyl (co)polymer (E.1) and/or polyalkylene terephthalates (E.2), and
F) from 0.1 to 20 parts by weight (based on the sum of components A + B + C) of further additives, selected from the group consisting of lubricants and mould release agents, nucleating agents, antistatics, stabilisers, dyes and pigments and fillers and reinforcing agents, and hydrated aluminium oxides (e.g. boehmite) or TiO₂,
wherein the weight ratio of component B to the phosphorus content from component C is in a range of from 16 to 22 to 1, preferably from 17 to 19 to 1, and
wherein the compositions are free of rubber-free polyalkyl (alkyl)acrylate.

2. Compositions according to claim 1 consisting of from 8.5 to 10 parts by weight (based on the sum of components A + B + C) of component B.

3. Compositions according to claim 1, wherein the monomers B.1 are selected from at least one of the group consisting of methyl methacrylate, ethyl methacrylate, 2-ethylhexyl methacrylate, allyl methacrylate, methyl acrylate, ethyl acrylate, n-butyl acrylate and tert-butyl acrylate.

4. Compositions according to claim 1 consisting of from 5.2 to 6.5 parts by weight (based on the sum of components A + B + C) of component C.

5. Compositions according to claim 1 consisting as component C of a mixture of a monophosphate and an oligophosphate according to formula (VIII), wherein the average value of N is from 0.1 to 10.

6. Compositions according to claim 1 or 5, wherein N is from 1.06 to 1.15.

7. Compositions according to claim 1 consisting of from 0.1 to 0.6 parts by weight (based on the sum of components A + B + C) of component D.

8. Compositions according to claim 1, wherein the composition is free of resin-like, thermoplastic and rubber-free vinyl (co)polymers (E.1) and/or polyalkylene terephthalates (E.2).

9. Compositions according to claim 1 consisting of from 0.1 to 10 parts by weight (based on the sum of components A + B + C) of component F.

10. Compositions according to claim 1 or 9 consisting as component F of at least one additive selected from the group consisting of lubricants and mould release agents, nucleating agents, antistatics, stabilisers, dyes, pigments, fillers, reinforcing agents and hydrated aluminium oxides (e.g. boehmite) or TiO₂.

11. Use of the compositions according to any one of claims 1 to 10 in the production of injection-moulded or thermoformed moulded bodies.

12. Moulded body comprising a composition according to any one of claims 1 to 10.

13. Moulded body according to claim 12, **characterised in that** the moulded body is part of a motor vehicle, bus, lorry, motor caravan, track vehicle, water craft or other vehicle or is a cover plate for the construction sector, flat wall element, partition wall, strip for protecting walls and edges, profile for electrical installation conduits, cable guide, conductor rail cover, window and door profile, furniture part or part of a traffic sign.

14. Moulded body according to claim 12, **characterised in that** the moulded body is a side wall, cladding or a cover for an airbag or a ventilator, a side part, a handle or part of a headrest or a storage area of a motor vehicle, bus, lorry or motor caravan.

## Revendications

1. Compositions, constituées par
A) 77 à 90 parties en poids (par rapport à la somme des composants A + B + C) de polycarbonate aromatique linéaire ou ramifié et/ou de polyestercarbonate aromatique linéaire ou ramifié,
B) 6 à 12 parties en poids (par rapport à la somme des composants A + B + C) de polymère greffé présentant
B.1 5 à 30 % en poids (à chaque fois par rapport au polymère greffé B) d'une enveloppe constituée par au moins un monomère de vinyle et
B.2 95 à 70 % en poids (à chaque fois par rapport au polymère greffé B) d'une ou de plusieurs bases de greffage de caoutchouc composite de silicone-acrylate,
C) 4 à 10 parties en poids (par rapport à la somme des composants A + B + C) de composés phosphorés selon la formule (VIII) 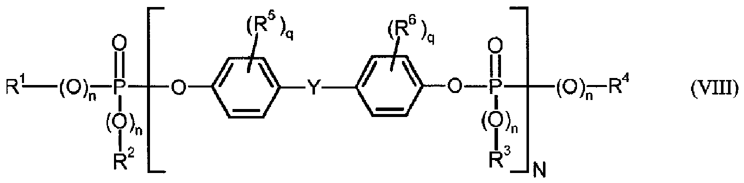 dans laquelle
R¹, R², R³ et R⁴, représentent, indépendamment les uns des autres, C₁-C₈-alkyle substitué par halogène ; C₅-C₆-cycloalkyle, C₆-C₁₀-aryle ou C₇-C₁₂-aralkyle à chaque fois le cas échéant substitué par halogène et/ou alkyle,
n valent, indépendamment les uns des autres, 0 ou 1,
q valent, indépendamment l'un de l'autre, 0, 1, 2, 3 ou 4,
N vaut 0,1 à 10
R⁵ et R⁶ représentent, indépendamment l'un de l'autre, C₁-C₄-alkyle, de préférence méthyle, ou halogène, de préférence chlore et/ou brome, et
Y représente une simple liaison, C₁-C₇-alkylidène, C₁-C₇-alkylène, C₅-C₁₂-cycloalkylène, C₅-C₁₂-cycloalkylidène, -O-, -S-, -SO-, -SO₂-ou -CO-,
D) 0,1-3 parties en poids (par rapport à la somme des composants A + B + C) d'agent antigoutte, et
E) 0-3 parties en poids (par rapport à la somme des composants A + B + C) de (co)polymère de vinyle de type résine, thermoplastique et exempt de caoutchouc (E.1) et/ou de poly(téréphtalate d'alkylène) (E.2), de manière particulièrement préférée, la composition est exempte de (co)polymère de vinyle exempt de caoutchouc, thermoplastique et de type résine (E.1) et/ou de poly(téréphtalates d'alkylène (E.2), et
F) 0,1-20 parties en poids (par rapport à la somme des composants A + B + C) d'autres additifs, choisis dans le groupe constitué par les agents lubrifiants et de démoulage, les agents de nucléation, les antistatiques, les stabilisants, les colorants et les pigments ainsi que les charges et les substances de renforcement, ainsi que les oxydes d'aluminium contenant des hydrates (par exemple la boehmite) ou le TiO₂,
le rapport pondéral du composant B à la teneur en phosphore du composant C se situant dans une plage de 16-22:1, de préférence de 17-19:1, et les compositions étant exemptes de poly((alkyl)acrylate d'alkyle) exempt de caoutchouc.

2. Compositions selon la revendication 1, constituées par 8,5 à 10 parties en poids (par rapport à la somme des composants A + B + C) de composant B.

3. Compositions selon la revendication 1, les monomères B.1 étant choisis parmi au moins un monomère du groupe constitué par le méthacrylate de méthyle, le méthacrylate d'éthyle, le méthacrylate de 2-éthylhexyle, le méthacrylate d'allyle, l'acrylate de méthyle, l'acrylate d'éthyle, l'acrylate de n-butyle et l'acrylate de t-butyle.

4. Compositions selon la revendication 1, constituées par 5,2 à 6,5 parties en poids (par rapport à la somme des composants A + B + C) de composant C.

5. Compositions selon la revendication 1, constituées, comme composant C, par un mélange d'un monophosphate et d'un oligophosphate selon la formule (VIII), la valeur moyenne de N valant 0,1 à 10.

6. Compositions selon la revendication 1 ou 5, N valant 1,06 à 1,15.

7. Compositions selon la revendication 1, constituées par 0,1 à 0,6 parties en poids (par rapport à la somme des composants A + B + C) de composant D.

8. Compositions selon la revendication 1, la composition étant exempte de (co)polymères de vinyle de type résine, thermoplastiques et exempts de caoutchouc (E.1) et/ou de poly(téréphtalates d'alkylène) (E.2).

9. Compositions selon la revendication 1, constituées par 0,1 à 10 parties en poids (par rapport à la somme des composants A + B + C) de composant F.

10. Compositions selon la revendication 1 ou 9, constituées, comme composant F, par au moins un additif choisi dans le groupe constitué par les agents lubrifiants et de démoulage, les agents de nucléation, les antistatiques, les stabilisants, les colorants, les pigments, les charges, les substances de renforcement et les oxydes d'aluminium contenant des hydrates (par exemple la boehmite) ou le TiO₂.

11. Utilisation des compositions selon l'une quelconque des revendications 1 à 10 pour la fabrication de corps façonnés moulés par injection ou thermoformés.

12. Corps façonné constitué par une composition selon l'une quelconque des revendications 1 à 10.

13. Corps façonné selon la revendication 12, **caractérisé en ce que** le corps façonné est une partie d'un véhicule automobile, d'un bus, d'un camion, d'un motor-home, d'un véhicule ferroviaire, d'un bateau ou d'un autre véhicule ou une plaque de recouvrement pour le secteur de la construction, un élément de paroi plat, une paroi de séparation, une bordure de protection de paroi et d'arête, un profil pour des chemins de câbles électriques, une échelle à câbles, un recouvrement de rail d'alimentation, un profil de fenêtre ou de porte, une partie de meuble ou une partie d'un panneau de signalisation.

14. Corps façonné selon la revendication 12, **caractérisé en ce que** le corps façonné est une paroi latérale, une garniture ou un recouvrement d'un airbag ou d'une aération, une partie latérale, une poignée ou une partie d'un appui-tête ou vide-poche d'un véhicule automobile, d'un bus, d'un camion ou d'un motor-home.
